# FASCICULE DE BREVET EUROPEEN

(11) **EP 3 365 829 B1**
(45) Date de publication et mention de la délivrance du brevet: **08.09.2021**
(21) Numéro de dépôt: 16794692.0
(22) Date de dépôt: 10.10.2016
(51) Int. Cl.: G06F 21/55, G06F 21/56, H04L 29/06

(54) **PROCÉDÉ D'AIDE A LA DÉTECTION D'INFECTION D'UN TERMINAL PAR UN LOGICIEL MALVEILLANT**
VERFAHREN ZUR UNTERSTÜTZUNG DER ERKENNUNG EINER INFEKTION EINES ENDGERÄTS DURCH SCHADPROGRAMME
METHOD OF AIDING THE DETECTION OF INFECTION OF A TERMINAL BY MALWARE

(30) Priorité: 19.10.2015 FR 1559947
(43) Date de publication de la demande: 29.08.2018
(73) Titulaire: ORANGE, 92130 Issy-les-Moulineaux (FR)
(72) Inventeur: MITTIG, Karel, 14000 Caen (FR); BIGNON, Fabien, 14740 Rosel (FR)
(86) Numéro de dépôt international: PCT/FR2016/052614
(87) Numéro de publication internationale: WO 2017/068261

(56) Documents cités:
- US-A1- 2009 028 160
- US-A1- 2012 054 860
- US-B1- 8 055 767
- US-B1- 8 286 239

## Description

La présente invention concerne un procédé d'aide à la détection d'une infection d'un terminal par un logiciel malveillant.

Elle trouve une application particulièrement intéressante dans la protection de réseaux et terminaux informatiques, notamment dans la détection de terminaux infectés par des logiciels malveillants tels que des virus. Les terminaux peuvent être des ordinateurs, des terminaux mobiles intelligents (on parle de « smartphone » en anglais), des tablettes, des serveurs.

L'infection de terminaux informatiques au moyen de logiciels malveillants est destinée à permettre à des personnes malveillantes, ou cybercriminels, de prendre le contrôle des terminaux à distance et d'en extraire des données sensibles telles que des identifiants, des mots de passe, des données bancaires, etc. Une telle infection peut se produire de différentes façons : téléchargement depuis le terminal de fichiers infectés à travers le réseau Internet, ouverture de pièces jointes à des courriers électroniques, on parle dans ce cas d'hameçonnage ou de « phishing » en anglais. Le logiciel malveillant peut également être transmis au moyen d'un support amovible tel qu'une clé « USB » (de l'anglais « Universal Serial Bus »). L'infection peut également être consécutive à l'exploitation par le créateur du logiciel malveillant d'une vulnérabilité du terminal, par exemple une faille du navigateur, etc.

Une fois que le terminal est infecté par le logiciel malveillant, il se connecte à un ou des serveurs malveillants situés dans le réseau Internet afin de recevoir des ordres ou/et d'envoyer des informations contenues dans le terminal infecté. La plupart des logiciels malveillants utilisent le protocole « http » (de l'anglais « hypertext transfer protocol ») qui constitue la majorité du trafic Internet. Les logiciels malveillants génèrent ainsi un trafic malveillant qui se fond dans un trafic légitime et qui est en outre difficile à identifier et à isoler.

Les techniques habituelles de détection d'un trafic malveillant reposent essentiellement sur une recherche dans une base de signatures d' « URL » (de l'anglais « Uniform Resource Locator ») malveillantes, ou liste noire d'URL malveillantes. Ces bases recensent des ressources et des serveurs malveillants connus dans le réseau Internet. Une tentative de connexion d'un terminal vers l'une des ressources dont la signature est présente dans la base indique soit la présence effective d'un logiciel malveillant sur le terminal, soit une tentative d'infection dudit terminal.

Afin de pallier ce genre d'attaque, il est habituel de mettre en place un système de surveillance du trafic réseau qui analyse l'ensemble du trafic issu du terminal afin d'identifier des communications qui peuvent être associées à un logiciel malveillant. Ainsi, lorsque le terminal émet une requête http à destination du réseau Internet, celle-ci est interceptée par le système de surveillance qui analyse le contenu de la requête. Si l'URL ne fait pas partie de la liste noire, le trafic n'est pas bloqué et le logiciel à l'origine de la requête http reçoit en réponse la ressource demandée. Si l'URL comprise dans la requête est référencée dans la liste noire des URL malveillantes, la requête est bloquée et un message d'erreur est envoyé au terminal. Dans ce cas, et afin de lutter contre les infections, une alerte est émise à destination d'un administrateur de sécurité afin d'appliquer au plus vite des solutions de remédiation, telles qu'un anti-virus spécialisé, une mise en quarantaine du terminal, etc., avant que le logiciel malveillant n'ait eu le temps de générer des dégâts importants.

Cependant, une telle solution génère de nombreux faux-positifs qui pénalisent l'administration du système. Un faux-positif se définit par la génération d'une alerte d'infection pour un terminal alors que celui-ci n'est pas infecté. En effet, un grand nombre d'accès à des URL malveillantes est lié non pas à la présence d'un logiciel malveillant sur le terminal considéré, mais à des redirections et des accès automatiques utilisant des fonctionnalités du protocole http et exploitées par les attaquants pour tenter d'infecter les terminaux concernés. Par exemple, une requête inoffensive émanant d'un terminal peut entraîner le chargement sur un serveur d'une page par le navigateur qui peut inclure des liens ou des redirections vers des ressources malveillantes. L'ajout de ces ressources malveillantes peut être fait par l'attaquant, par exemple par exploitation d'une vulnérabilité du serveur web contacté par le terminal, par utilisation détournée de publicités, etc. Par exemple, un utilisateur se connecte au site «http://downloadmusic1.com/» et son navigateur se connecte de manière automatique et transparente au serveur malveillant « http://lshot.ru/ » suite à une redirection par le serveur contacté. Un tel accès est qualifié d'indirect car il est consécutif à un accès à une ressource légitime du réseau, en l'espèce «http://downloadmusic1.com/». Le système de surveillance analyse les deux requêtes qui émanent du terminal et génère une alerte pour la deuxième requête indiquant que le terminal est infecté. Ainsi, aucune distinction n'est faite par le système de surveillance entre une tentative d'infection par accès indirect, et une véritable infection qui implique une connexion directe sur un site malveillant. Un administrateur de sécurité est alors obligé d'analyser chaque alerte afin de déterminer si le terminal est réellement infecté. Cela diminue l'efficacité et l'intérêt d'une détection automatique d'infection d'un terminal, dès lors que les tentatives d'infection donnent également lieu à des alertes du même niveau de criticité que les alertes représentatives de réelles infections. Les documents (US8286239 B1) et (US2012/054860 A1) constituent des documents pertinents de l'art antérieur.

Un des buts de l'invention est de remédier à des insuffisances/inconvénients de l'état de la technique et/ou d'y apporter des améliorations.

A cette fin, l'invention propose un procédé d'aide à la détection d'infection d'un terminal par un logiciel malveillant, comprenant :
- réception en provenance du terminal d'une requête courante de demande d'accès à une ressource d'un réseau,
- détection que la ressource requise est malveillante,
- lorsque l'entête de la requête courante comprend également une référence à une ressource initiale à partir de laquelle la ressource a été obtenue, vérification qu'un accès à la ressource initiale a été demandé depuis le terminal dans au moins une requête antérieure, ladite ressource initiale ayant été détectée légitime lors du traitement de la requête antérieure, ladite requête courante étant alors considérée comme une tentative d'infection du terminal.

Le procédé de détection d'infection d'un terminal permet ainsi d'améliorer la fiabilité de la détection d'infection en réduisant de façon notable le nombre de faux-positifs. Pour mémoire un faux-positif correspond à la génération d'une alerte d'infection alors que le terminal est sain, exempt d'infection. En effet, le procédé décrit permet de distinguer parmi des requêtes concernant des ressources identifiées comme malicieuses, celles qui sont liées à une infection du terminal, et celles qui sont liées à une tentative d'infection. La tentative d'infection se caractérise par un accès indirect à un contenu malveillant, qui est le fruit d'une redirection ou de l'inclusion d'un lien au niveau d'un serveur ou d'une application web. Le contenu malveillant est alors chargé automatiquement par le terminal lors de l'accès à une page ou à un lien référençant ce contenu. Dans ce cas, c'est le serveur à l'origine de la redirection ou du lien qui a peut-être été victime d'une attaque. Avec le procédé d'aide à la détection, un administrateur de sécurité qui reçoit des alertes d'infection ne perd pas de temps dans l'analyse de tentatives d'infection. Il peut alors réagir rapidement à des alertes qui correspondent à de réelles infections du terminal afin d'éviter la propagation d'une attaque à d'autres terminaux et des effets désastreux sur le terminal.

Une mise en œuvre de l'invention a permis de filtrer plus de quatre-vingt-dix pour cent des alertes qui correspondaient à des accès indirects à des ressources malveillantes, et donc de réduire très fortement le nombre de fausses alertes qui sans ce procédé auraient été émises.

Dans un exemple de réalisation, le procédé comprend, lorsque la ressource initiale dont la référence est comprise dans la requête courante n'a pas été demandée par le terminal dans une requête antérieure pendant un intervalle de temps de supervision, un envoi d'une alerte représentative d'une infection du terminal.

Dans ce cas, la requête courante est incohérente avec les requêtes légitimes antérieures émises depuis le terminal dans un passé récent. En effet, la requête courante fait référence à une ressource initiale qui figure dans le champ référent de l'entête, alors que la ressource initiale n'a pas fait l'objet d'une requête depuis le terminal durant ce passé récent qui correspond à l'intervalle de supervision. Dans ce cas, il est probable qu'un cybercriminel a injecté un faux champ référent dans la requête courante de manière à faire croire que la requête courante est liée à une précédente requête émise depuis le terminal. Il y a donc lieu d'envoyer une alerte, puisque la requête courante a été falsifiée sur le terminal.

Dans un exemple de réalisation, le procédé comprend, lorsque la ressource requise est une ressource légitime, un enregistrement de ladite ressource en association avec une valeur d'horodatage courante, représentative d'une dernière date d'accès à la ressource.

Une ressource légitime requise depuis le terminal est associée à une valeur d'horodatage représentative de la dernière date d'accès à la ressource. La valeur d'horodatage permet ainsi de tenir compte d'un délai normal qui sépare l'émission de requêtes successives liées par le biais de leur champ référent. Par exemple, dans le cas d'un utilisateur qui surfe sur Internet et qui accède à une première page depuis son navigateur, puis à partir de cette première page à une seconde page, on estime que le temps qui sépare l'accès à ces deux pages n'excède pas une certaine durée, qui correspond dans la procédé à l'intervalle de temps de supervision. L'enregistrement des ressources légitimes requises et la prise en compte de valeurs d'horodatage associées aux requêtes relatives à ces ressources permet ainsi de tenir compte d'un lien temporel entre des requêtes liées par le biais de leur champ référent.

Dans un exemple de réalisation, la ressource est enregistrée dans un historique de requêtes, l'enregistrement de la ressource comprenant :
- application d'au moins une fonction de hachage à une valeur binaire courante associée à la ressource,
- détermination d'au moins une position courante dans un filtre de Bloom à date d'expiration à partir de ladite valeur binaire courante, ledit filtre étant associé au terminal et assimilé à l'historique des requêtes, et
- enregistrement de la valeur d'horodatage courante à ladite position courante du filtre.

L'exemple décrit ici propose d'utiliser un filtre de Bloom à date d'expiration afin de gérer un historique de requêtes à des ressources légitimes. Les filtres de Bloom sont des structures de données compactes, bien adaptées pour mémoriser un très grand nombre de données et pour être interrogées sur la présence ou l'absence d'un élément donné dans le filtre. Ainsi, les filtres de Bloom permettent d'obtenir des performances très intéressantes lors d'une mise en œuvre en temps réel du procédé d'aide à la détection d'infection d'un terminal par un logiciel malveillant. Le filtre de Bloom à date d'expiration enregistre dans une entrée du filtre une valeur d'horodatage qui est associée ici à la dernière date d'accès à la ressource légitime qui figure dans la requête légitime.

Par ailleurs l'utilisation d'un filtre de Bloom pour enregistrer des informations sur les requêtes légitimes émises depuis le terminal préserve l'anonymat des utilisateurs à l'origine des requêtes. En effet, les filtres de Bloom enregistrent des valeurs d'horodatage associées à des requêtes, les requêtes étant uniquement utilisées pour calculer une position dans le filtre. Ainsi, une fois qu'une position a été calculée en association avec une requête, aucune information quant au contenu de la requête n'est stockée dans le filtre. Cet aspect est fondamental pour le respect de la vie privée des utilisateurs, notamment dans le cas où la solution d'aide à la détection d'infection d'un terminal est mise en œuvre dans le réseau.

Dans un exemple d'utilisation du filtre de Bloom décrit précédemment, une recherche d'une ressource initiale dans le filtre comprend :
- application de la fonction de hachage à une valeur binaire initiale associée à la ressource initiale,
- détermination d'au moins une position dans le filtre de Bloom à partir de ladite valeur binaire initiale,
- sélection, parmi la au moins une position, de la position dans le filtre qui comprend la valeur d'horodatage la plus faible,
- lorsque la durée comprise entre la valeur d'horodatage la plus faible et une date courante est inférieure à une durée d'expiration associée au filtre, indication que la ressource initiale figure dans l'historique.

Cet exemple décrit les étapes qui sont mises en œuvre pour rechercher si une ressource initiale qui est référencée dans une requête courante figure ou non dans l'historique des requêtes.

Dans un exemple de réalisation, le filtre de Bloom est associé au terminal et à au moins un champ compris dans un entête de la requête courante.

Dans cet exemple, il est tenu compte d'un contexte propre aux requêtes émises depuis le terminal pour la gestion de l'historique. Ainsi, un historique est associé non seulement au terminal mais également à un contexte d'émission des requêtes. Le contexte comprend par exemple l'application à l'origine de la requête, le langage dans lequel le terminal souhaite recevoir une réponse, etc. Les éléments du contexte sont par exemple des champs qui peuvent être présents dans les requêtes émises depuis le terminal. Ainsi, il peut y avoir une pluralité d'historiques gérés pour un seul terminal.

Cela permet de pallier un cas où un cybercriminel renseigne dans des requêtes à des ressources malveillantes qu'il fait émettre depuis le terminal un champ référent à une ressource populaire qui a de fortes chances d'être présente dans l'historique des ressources légitimes requises depuis le terminal. Ce cas correspond à un contournement de la solution proposée par le procédé afin d'écarter des alertes les accès indirects à des ressources malveillantes, et qui consiste à vérifier, lorsqu'un champ référent est présent dans une requête courante à une ressource malveillance, que la ressource qui figure dans le champ référent a été requise précédemment depuis le terminal.

L'invention porte également un dispositif d'aide à la surveillance d'un trafic réseau, agencé pour aider à la détection d'infection d'un terminal par un logiciel malveillant, ledit dispositif comprenant :
- des moyens de réception, agencés pour recevoir en provenance du terminal une requête courante de demande d'accès à une ressource d'un réseau,
- des moyens de détection, agencés pour détecter que la ressource requise est malveillante,
- des moyens de vérification, agencés pour vérifier, lorsque l'entête de la requête courante comprend également une référence à une ressource initiale à partir de laquelle la ressource a été obtenue, que l'accès à la ressource initiale a été demandé depuis le terminal dans au moins une requête antérieure, ladite ressource initiale ayant été détectée légitime lors du traitement de la requête antérieure, ladite requête courante étant alors considérée comme une tentative d'infection du terminal.

Dans un exemple de réalisation, le dispositif d'aide à la surveillance est intégré dans un terminal utilisateur.

Dans cet exemple, le dispositif de surveillance est intégré dans le terminal. Il s'agit par exemple d'un logiciel anti-virus ou anti-malware installé sur le terminal.

L'invention concerne aussi un programme d'ordinateur sur un support de données et chargeable dans la mémoire d'un ordinateur, le programme comprenant des portions de code pour l'exécution des étapes du procédé d'aide à la détection d'infection d'un terminal par un logiciel malveillant tel que décrit précédemment, lorsque le programme est exécuté sur ledit ordinateur.

L'invention porte également sur un support de données dans lequel est enregistré le programme précédent.

D'autres caractéristiques et avantages de la présente invention seront mieux compris de la description et des dessins annexés parmi lesquels :
- la figure 1 présente les étapes d'un procédé d'aide à la détection de l'infection d'un terminal par un logiciel malveillant, selon un exemple de réalisation ;
- les figures 2a et 2b présentent des exemples de réalisation des étapes de mise à jour de l'historique des requêtes et de recherche dans l'historique ;
- les figures 3a, 3b et 3c illustrent l'utilisation de filtres de Bloom pour la mise en œuvre du procédé, selon différents exemples de réalisation ;
- la figure 4 est une représentation schématique d'un dispositif de surveillance de trafic utilisé pour la mise en œuvre du procédé, selon un exemple de réalisation.

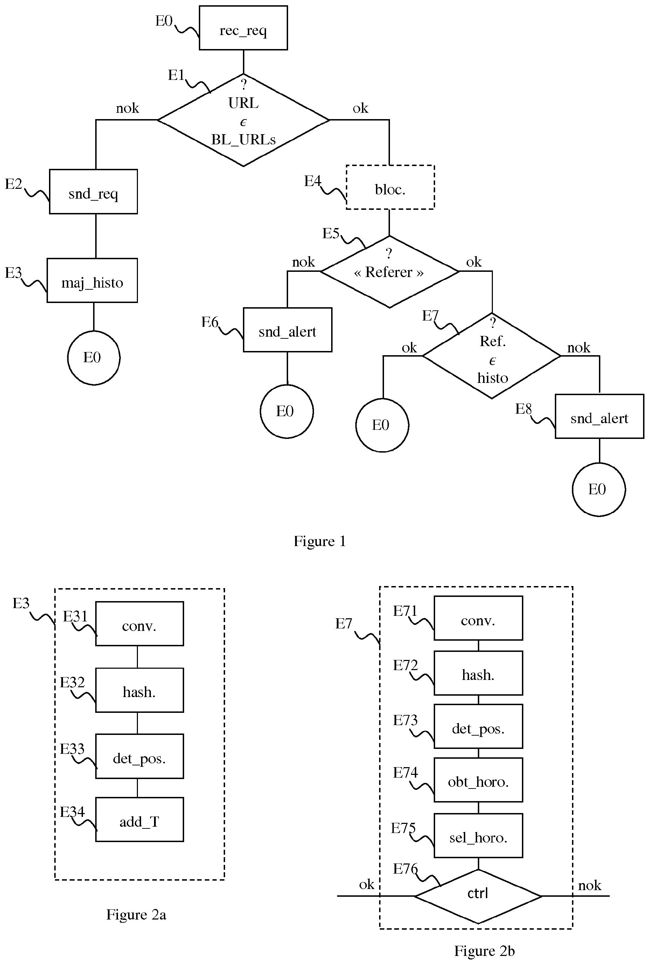

Les étapes d'un procédé d'aide à la détection d'infection d'un terminal par un logiciel malveillant, selon un exemple de réalisation vont maintenant être décrites en relation avec la figure 1.

Un terminal informatique (non représenté sur la figure 1) est agencé pour émettre des requêtes afin d'accéder à des ressources d'un réseau, par exemple le réseau Internet. Une ressource est généralement désignée par un localisateur uniforme de ressource, ou « URL » (de l'anglais «Uniform Resource Locator »), auquel se substitue habituellement une adresse web. Les ressources sont accédées au moyen d'un protocole de communication client-serveur, par exemple « http » (de l'anglais « hypertext transfer protocol »). Les clients http les plus connus sont les navigateurs web qui permettent à des utilisateurs d'accéder au moyen de leur terminal à un serveur contenant des données. Par la suite on appelle ressource, ou URL, une donnée proposée par un serveur ou le serveur lui-même qui sont concernés par la requête. Dans l'exemple décrit ici, le terminal informatique est par exemple un ordinateur personnel de type « PC » (de l'anglais « Personal Computer »), un terminal mobile, une tablette, un « PDA » (de l'anglais « Personal Digital Assistant »), etc., agencés pour permettre à un utilisateur d'accéder à des ressources d'un réseau de données tel que le réseau Internet. Dans un autre exemple de réalisation, le terminal informatique est un serveur.

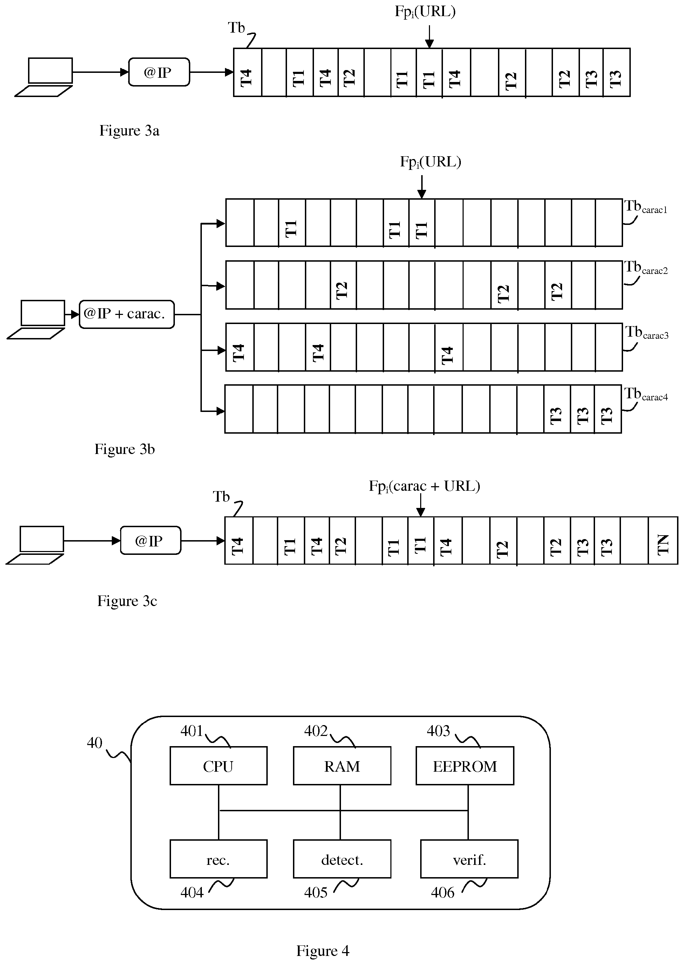

Un dispositif de surveillance du trafic 40 tel que représenté sur la figure 4 est agencé pour aider à la détection d'une infection du terminal par un logiciel malveillant (ou « malware » en anglais). Le dispositif de surveillance 40 est placé en coupure de trafic entre le terminal et le réseau Internet. Ainsi, toute requête de ressource émise par le terminal à destination du réseau Internet transite par le dispositif de surveillance 40 qui l'intercepte et l'analyse. Il est pertinent d'analyser l'ensemble des requêtes http issues du terminal car la plupart des cybercriminels utilisent le protocole http pour perpétrer des attaques au moyen de logiciels malveillants. En effet, ce protocole constituant la majorité du trafic Internet, les logiciels malveillants qui reposent sur ce protocole génèrent un trafic d'attaque qui se fond dans un trafic légitime et qu'il est de ce fait difficile de détecter et d'isoler. L'invention n'est bien sûr pas limitée au protocole http et peut s'appliquer, moyennant des adaptations, à d'autres protocoles.

Dans une étape initiale E0 de réception d'une requête, une requête http courante, destinée à demander l'accès à une ressource courante située dans le réseau Internet est envoyée depuis le terminal à un serveur du réseau apte à délivrer la ressource. La requête courante émise par le terminal est interceptée par le dispositif de surveillance 40. L'utilisateur du terminal a par exemple sélectionné un lien hypertexte dans une page affichée dans son navigateur web. Par exemple, il a sélectionné le lien « http://downloadmusic1.com/ ». Outre le nom du serveur à contacter, ici « dowloadmusicl.com », la requête http comprend dans un entête un ensemble de champs destinés à fournir au serveur destinataire de la requête des informations complémentaires sur des caractéristiques de l'application cliente à l'origine de la requête ou/et des caractéristiques de la ressource courante requise. Ainsi, un champ de l'entête précise le nom de l'application cliente à l'origine de la requête, tel que le nom du navigateur utilisé pour émettre la requête ainsi que son numéro de version, les langages supportés par l'application cliente, le format de l'écran, etc. L'entête peut comprendre également un champ référent, ou champ « Referer » dans le cas du protocole http. Le champ référent permet d'indiquer au serveur une ressource initiale de référence à partir de laquelle la ressource courante a été obtenue. Dans le cas d'un utilisateur qui navigue sur internet et qui accède à une page web, si le champ référent est renseigné, cela indique que l'utilisateur a suivi un lien pour accéder à la page relative à la ressource courante et le champ référent précise alors le lien que l'utilisateur a sélectionné. Par exemple, si l'entête de la requête qui demande l'accès au serveur « downloadmusic1.com », comprend dans le champ référent « http://google.fr », cela indique que l'utilisateur a sélectionné la ressource « downloadmusic1.com » depuis le site « google.fr ». A noter que dans ce cas, on dit que l'accès relatif à la ressource « downloadmusicl.com » est un accès indirect. Les informations contenues dans le champ référent sont utilisées habituellement par un serveur pour identifier des sites tiers pointant sur son contenu. Cela permet à l'administrateur du serveur de faire des statistiques d'accès, des optimisations en termes de dimensionnement, etc. A noter que le champ référent n'est pas uniquement présent lors d'une navigation explicite d'un utilisateur qui à partir d'une première page sélectionne un lien pour accéder à une deuxième page. Il est également présent dans des requêtes qui sont effectuées de manière automatique par le navigateur pour charger par exemple des images ou des scripts et qui sont dues à des redirections au niveau du serveur. Ces fonctionnalités sont d'ailleurs exploitées par les cybercriminels pour tenter d'infecter des terminaux.

Dans une étape suivante E1 de détection, le dispositif de surveillance 40 vérifie si la ressource courante qui figure dans la requête courante est présente dans une base de données de ressources malveillantes. De telles bases recensent des signatures d'URL associées à des ressources malveillantes connues de l'Internet. Il est donc vérifié si la signature de la ressource courante figure dans la base.

Dans un premier cas (branche « nok » sur la figure 1) où la ressource courante ne figure pas dans la base des ressources réseau malveillantes, indiquant ainsi que la requête est légitime dans le sens où elle concerne une ressource qui n'est pas référencée comme malveillante, la requête est retransmise dans le réseau par le dispositif de surveillance dans une étape E2 d'envoi, afin d'être traitée. La ressource courante requise est alors ajoutée à un historique de requêtes dans une étape E3 de mise à jour de l'historique des requêtes. Le procédé continue alors dans l'étape E0 de réception, en attente d'une prochaine requête. L'historique des requêtes est destiné à mémoriser les requêtes légitimes, c'est-à-dire qui concernent des ressources légitimes, émises depuis le terminal sur un intervalle de temps de supervision donné. L'historique concerne donc des requêtes antérieures à la requête courante. L'historique est également destiné à vérifier pour toute nouvelle requête à une ressource malveillante qui comprend dans son entête une référence à une ressource initiale, si la nouvelle requête est liée, par le biais du champ référent, à une requête légitime antérieure, émise dans un passé récent depuis le terminal et qui concerne la ressource initiale. Dans ce cas, la nouvelle requête qui concerne une ressource malveillante n'est que le fruit d'une tentative d'infection du terminal. En effet, la requête initiale concerne une ressource qui comprend un lien ou une redirection vers la ressource malveillante. L'ajout de la ressource malveillante a pu être fait par le cybercriminel par exploitation d'une vulnérabilité du serveur contacté, l'utilisation détournée de réseaux de publicité, etc. Dans le cas où la nouvelle requête n'est pas liée par le biais du champ référent à une requête initiale émise depuis le terminal alors la nouvelle requête est due à une infection du terminal. C'est une requête spontanée, issue probablement d'un logiciel malveillant installé sur le terminal de l'utilisateur et indépendante des requêtes récemment émises depuis le terminal. L'utilisation et la gestion de l'historique permet ainsi d'affiner l'analyse des requêtes qui concernent des ressources malveillantes et de faire un tri entre celles qui sont dues à des tentatives d'infection et celles qui sont dues à des infections réelles du terminal. Ainsi, aucune alerte n'est levée dans le cas de requêtes indirectes, c'est-à-dire consécutives à des redirections ou des liens au niveau d'un serveur, permettant de réduire notablement le nombre de faux-positifs.

La gestion d'un historique de requêtes se justifie par le fait d'une part qu'il est nécessaire d'identifier des liens entre plusieurs requêtes émises depuis un terminal dans le but d'identifier des liens légitimes entre requêtes, ou/et des redirections vers des ressources malveillantes indépendantes du terminal, et d'autre part par le fait que l'information contenue dans le champ référent d'une requête ne peut être considérée comme fiable dans le cas de logiciels malveillants. En effet, un cybercriminel peut aisément créer un logiciel malveillant qui positionne de manière systématique dans des requêtes émises à l'insu de l'utilisateur le champ référent à une valeur associée à un site populaire, de manière à faire croire que l'application à l'origine de la requête a suivi un lien fourni par ce site populaire. Dans une approche naïve où les requêtes qui comprennent un champ référent à une ressource légitime seraient systématiquement écartées de l'analyse du fait de leur référence à une précédente requête, cela permettrait à un logiciel malveillant de ne pas être détecté et de continuer à émettre des requêtes jusqu'à ce qu'une requête vers un site malveillant aboutisse. Il est donc nécessaire d'aller plus loin qu'une simple vérification de la présence d'un champ référent dans ce cas et de vérifier que la requête initiale a bien été émise depuis le terminal dans un passé récent.

Un exemple de réalisation de l'étape E3 de mise à jour de l'historique est décrit plus loin, en relation avec la figure 2a.

Dans un deuxième cas (branche « ok » sur la figure 1) où la ressource courante requise depuis le terminal figure dans la base des ressources malveillantes connues, dans une étape optionnelle E4 de blocage et d'envoi d'un message, le dispositif de surveillance 40 bloque la requête et envoie un message d'information au terminal indiquant que l'accès à la ressource est refusé. A noter qu'à ce stade, aucune alerte n'est envoyée à un administrateur de sécurité en charge de la sécurité du terminal. En effet, la requête courante concerne une ressource identifiée comme étant malicieuse, elle est bloquée, mais on ne peut dire si la requête est due à une infection du terminal ou à une tentative d'infection. Pour mémoire, une requête inoffensive émise par le terminal peut entraîner le chargement sur un serveur d'une page par le navigateur, qui peut inclure des liens ou des redirections vers des ressources malveillantes. Le but d'une telle requête peut être d'infecter le terminal. En tout état de cause, le problème se situe dans ce cas au niveau du serveur et non au niveau du terminal.

Dans une étape suivante E5 de contrôle, le dispositif de surveillance 40 vérifie si la requête courante comprend dans son entête une référence à une ressource initiale. En d'autres termes le dispositif de surveillance vérifie si l'entête de la requête courante comprend un champ référent qui comprend la ressource initiale.

Dans un premier cas (branche « nok » sur la figure 1) où la requête courante ne comprend pas dans son entête une référence à une ressource initiale, alors une alerte est levée à l'attention de l'administrateur de sécurité dans une étape E6 d'envoi d'une alerte. L'alerte est destinée à informer l'administrateur que le terminal est infecté. En effet, dans ce cas, la requête émise par le terminal est une requête directe à une ressource malveillante via une application, par exemple le navigateur. Dans cet exemple, le procédé continue dans l'étape E0 de réception, en attente d'une prochaine requête. En variante, le procédé s'arrête, en attente d'une analyse de l'administrateur de sécurité et d'une mise en œuvre d'une mesure de remédiation.

Dans un deuxième cas (branche « ok » sur la figure 1) où la requête comprend dans son entête une référence à une ressource initiale, il est vérifié dans une étape E7 de test si le champ référent qui figure dans l'entête de la requête courante appartient à l'historique des ressources.

Dans un premier cas (branche « ok » sur la figure 1), la ressource initiale qui figure dans le champ référent de la requête courante figure dans l'historique des requêtes. Cela signifie que la ressource initiale a été demandée depuis le terminal dans au moins une requête antérieure dans un passé récent, plus précisément pendant l'intervalle de temps de supervision. Dans ce cas, la requête courante constitue une requête d'accès indirecte à la ressource courante malveillante, issue probablement d'une redirection ou d'un lien au niveau d'un serveur ou d'un site web. Cette requête est représentative d'une tentative d'infection du terminal mais en aucun cas d'une infection réelle du terminal, il n'y a donc pas lieu d'alerter l'administrateur. Le procédé continue à l'étape E0, en attente d'une prochaine requête.

Dans un deuxième cas (branche « nok » sur la figure 1) où la ressource initiale qui figure dans le champ référent ne figure pas dans l'historique, indiquant que la ressource initiale n'a pas été demandée par le terminal dans une requête antérieure pendant l'intervalle de temps de supervision, une alerte est levée à l'attention de l'administrateur de sécurité au cours d'une étape E8 d'envoi d'une alerte. En effet, dans ce cas, le champ référent qui figure dans la requête courante est un faux champ référent : un cybercriminel a manipulé la requête courante sur le terminal afin d'introduire un champ référent dont le contenu n'est lié à aucune requête antérieure émise depuis le terminal. Une telle manipulation est destinée à faire croire que la requête à la ressource malveillante est liée à une redirection au niveau du serveur ou d'un serveur web. En tout état de cause, la falsification de la requête sur le terminal par le cybercriminel est représentative d'une infection effective du terminal, le cybercriminel ayant réussi à manipuler la requête. Dans cet exemple, le procédé continue dans l'étape E0 de réception, en attente d'une prochaine requête. En variante, le procédé s'arrête, en attente d'une analyse de l'administrateur de sécurité et d'une mise en œuvre d'une mesure de remédiation le cas échéant.

Dans l'exemple décrit ici, une requête à une ressource malveillante est bloquée au cours de l'étape E4 de blocage. Dans un autre exemple de réalisation, la requête n'est pas bloquée. On peut vouloir privilégier l'envoi des requêtes pour éviter de bloquer un trafic légitime. En effet, il se peut que la base de données des ressources malveillantes soit erronée et comprenne une ressource tout à fait légitime. On comprend dans ce cas l'importance de distinguer une infection du terminal d'une tentative d'infection.

Des exemples de mise en œuvre de l'étape E3 de mise à jour de l'historique des requêtes, et de l'étape E7 de recherche de la ressource dans l'historique vont maintenant être décrits en relation avec respectivement les figures 2a et 2b.

L'étape E3 décrite en relation avec la figure 2a comprend une pluralité de sous-étapes. Dans cet exemple de réalisation, la mise à jour de l'historique des requêtes reposent sur l'utilisation des filtres de Bloom à date d'expiration (ou « time-out Bloom filter » en anglais). Un filtre de Bloom est une structure de données probabiliste, compacte, adaptée pour mémoriser de manière optimale une très grande quantité de données, et pour être interrogée sur la présence ou l'absence d'un élément donné dans le filtre. Plus précisément, un filtre de Bloom est une table de n éléments. S'agissant de filtres à date d'expiration, les différents éléments de la table, sont destinés à contenir des dates à la place d'un simple bit dans le cas des filtres de Bloom standards. Enregistrer une requête, plus précisément une ressource associée à une requête, dans le filtre de Bloom consiste à calculer une pluralité de positions dans le filtre à partir de la ressource comprise dans la requête et à enregistrer dans cette pluralité de positions une valeur d'horodatage correspondant à la date de réception de la requête par le module de surveillance 40. Cette valeur d'horodatage est représentative de la dernière date d'accès à la ressource. Il est connu que les filtres de Bloom sont sujets aux faux-positifs. En effet, bien que l'on sache avec certitude qu'un élément est absent du filtre, on ne sait qu'avec une certaine probabilité qu'un élément peut être présent dans le filtre. Afin de réduire ce nombre de faux-positifs, dû à de possibles collisions dans le filtre, plusieurs positions sont calculées pour chaque requête. Ainsi une requête est associée à plusieurs positions dans le filtre.

Dans cet exemple de réalisation, un filtre de Bloom à date d'expiration Tb est associé au terminal, par exemple à l'adresse IP du terminal dans une phase de configuration initiale (non représentée sur la figure 2a). Le filtre Tb est un vecteur à n-éléments, notés Tb[0], ...Tb[n-1], initialisé à 0. Dans l'exemple décrit ici n est fixé à vingt-cinq mille.

Dans une première sous-étape E31 de conversion, une ressource courante légitime notée x qui figure dans la requête courante est convertie dans un format binaire. Cette conversion est obtenue à partir de la valeur numérique de chacun des caractères qui composent la chaîne de caractères désignant la ressource courante. La valeur binaire de la ressource ainsi obtenue est notée b. Par exemple on peut utiliser des convertisseurs disponibles sur Internet.

Dans une sous-étape suivante E32 d'application de fonctions de hachage, k fonctions de hachage Fpᵢ, 1 ≤ i ≤ k, sont appliquées au format binaire b obtenu au cours de la sous-étape précédente, permettant d'obtenir k empreintes associées à la ressource courante x et notées Eᵢ(x) = Fpᵢ(b). Dans l'exemple décrit ici, k est fixé à 3.

Dans une sous-étape E33 de détermination de positions dans le vecteur, il est déterminé k positions dans le vecteur Tb. Ces k positions sont notées Pᵢ. Les k positions sont déterminées par les k empreintes calculées précédemment, modulo la taille du vecteur Tb. En d'autres termes, Pᵢ(x) = Eᵢ(x) mod n.

Dans une sous-étape E34 d'ajout dans l'historique, une valeur d'horodatage courante Tₓ, correspondant à la dernière date d'accès à la ressource courante x, ou plus précisément la date de réception de la requête par le dispositif de surveillance 40, est insérée dans le vecteur Tb associé au terminal, aux k positions Pᵢ(x) déterminées précédemment. En d'autres termes, Tb[Pᵢ(x)] = Tₓ, pour 1 ≤ i ≤ k. Par exemple, l'heure Posix, qui exprime le nombre de secondes écoulées depuis le 1^{er} janvier 1970 est utilisée pour représenter la date courante Tₓ. Les k positions dans le filtre mémorisent donc la dernière date d'accès à la ressource courante x.

L'association d'un filtre Tb au terminal et l'enregistrement de dates d'accès à des ressources sont illustrés de façon schématique au moyen de la figure 3a.

Une fois le filtre Tb créé, l'étape E7 de test d'appartenance du champ référent à l'historique, décrite en relation avec la figure 2b est mise en œuvre pour toute requête à une ressource malveillante qui comprend dans son entête un champ référent. Elle est destinée à vérifier que l'accès à une ressource initiale, notée x', qui figure dans le champ référent de la requête courante a bien été demandé depuis le terminal précédemment. « Précédemment » signifie ici dans un passé récent qui constitue l'intervalle de supervision. Cet intervalle de supervision correspond à la période d'expiration du filtre de Bloom à date d'expiration Tb, ou durée de conservation dans le filtre. Dans l'exemple décrit ici, la période d'expiration est fixée à 5 minutes.

Dans une sous-étape E71 de conversion, la fonction de conversion d'un texte en binaire est appliquée à la ressource initiale x' qui figure dans le champ référent de la requête courante afin d'obtenir une valeur binaire b' de la ressource initiale.

Dans une sous-étape suivante E72 d'application des fonctions de hachage, les k fonctions de hachage Fpᵢ utilisées lors de la mise à jour de l'historique sont appliquées à la valeur binaire b' de la ressource initiale afin de calculer k empreintes associées à la ressource initiale x', notées Eᵢ(x') = FPᵢ(b').

Dans une sous-étape E73 de détermination de positions dans le filtre, il est déterminé pour la ressource initiale x', k positions notées Pᵢ dans le vecteur Tb. Les k positions sont déterminées par les k empreintes calculées au cours de la sous-étape E42, modulo la taille du vecteur Tb. En d'autres termes, Pᵢ(x') = Eᵢ(x') mod n.

Dans une étape suivante E74 d'obtention de valeurs d'horodatage, il est récupéré les k valeurs d'horodatage qui figurent dans le filtre Tb aux k positions Pᵢ(x') calculées au cours de la sous-étape E73. A noter que ces valeurs d'horodatage peuvent ne pas être identiques. En effet, en cas de collisions, une première et une deuxième ressource, requises à différents instants, ont pu permettre de calculer une même position dans le filtre Tb. Dans ce cas, la valeur d'horodatage enregistrée à cette position est nécessairement celle associée à la deuxième ressource et est postérieure à celles enregistrées aux deux autres positions calculées pour la première ressource.

Dans une sous-étape suivante E75 de sélection d'une valeur d'horodatage, les différentes valeurs d'horodatage associées à la ressource x' et qui figurent aux k positions Pᵢ(x') dans le filtre Tb sont comparées entre elles afin de ne garder que la valeur la plus faible, notée T_{MIN}, qui correspond à la date la plus ancienne d'enregistrement de la ressource initiale dans le filtre. Cette comparaison entre les k valeurs d'horodatage enregistrées permet de tenir compte d'éventuelles collisions lors du calcul des positions dans le filtre Tb. A noter que si la valeur d'horodatage la plus faible T_{MIN} est égale à zéro, la ressource initiale n'a jamais fait l'objet d'une requête depuis le terminal. Si elle est différente de zéro, la valeur d'horodatage la plus faible T_{MIN} correspond a priori à la dernière date d'accès depuis le terminal à la ressource initiale qui figure dans le champ référent.

Dans une sous-étape suivante E76 de contrôle, il est vérifié que la valeur d'horodatage la plus faible T_{MIN} est différente de zéro d'une part et d'autre part que la différence entre une date courante T_{COURANTE} et la valeur d'horodatage la plus faible T_{MIN} est inférieure à la période d'expiration associée au filtre de Bloom T_{EXP}. Si ces deux conditions sont réunies (branche « ok » sur la figure 2b) cela signifie que la ressource initiale figure dans l'historique. En d'autres termes, la ressource initiale, présente dans le champ référent a bien été consultée à partir du terminal durant l'intervalle de supervision. Dans le cas contraire (branche « nok » sur la figure 2b) la ressource initiale ne figure pas dans l'historique.

A noter que la période d'expiration T_{EXP} du filtre Tb, qui correspond à l'intervalle de supervision, est exploitée durant l'étape E7 de test d'appartenance d'une requête au filtre Tb mais n'est pas gérée à proprement parler lors de la mise à jour du filtre. En effet, le filtre de Bloom à date d'expiration est habituellement prévu pour supprimer des entrées lorsque celles-ci ont expiré, c'est-à-dire lorsqu'elles les valeurs d'horodatage ont dépassé la date d'expiration par rapport à la date courante. Il a été choisi de faire abstraction de cette étape de suppression, non nécessaire puisque dans la sous-étape E76 de contrôle la valeur d'horodatage d'une entrée est comparée à la date d'expiration T_{EXP}. Cela permet d'optimiser l'implémentation du procédé en termes de temps de calcul et d'utilisation de la mémoire.

Dans l'exemple décrit ici la taille du filtre de Bloom à date d'expiration Tb est fixée à vingt-cinq mille entrées, la période d'expiration à cinq minutes et trois fonctions de hachage sont utilisées. Ces valeurs ont été déterminées de façon empirique et constituent un bon compromis entre élimination des fausses alertes et optimisation de l'utilisation de la mémoire. On estime qu'avec ces valeurs, quatre-vingt-dix pour cent des fausses alertes sont éliminées. Si l'on augmente la taille de l'historique, un taux plus important de fausses alertes peut être éliminé mais l'on s'expose alors à des problèmes de mémoire. Si l'on diminue la période d'expiration, on risque de filtrer moins de faux-positifs. Si l'on diminue le nombre de fonctions de hachage, on augmente le nombre de collisions et donc on augmente le taux de faux-positifs. A noter que plus de fonctions de hachage pourraient être utilisées. Il est en effet admis que l'utilisation de sept fonctions de hachage permet de mémoriser de manière optimale deux à trois millions d'entrées dans un filtre de Bloom dont la taille est fixe et indépendante du nombre d'éléments contenus. Cependant, on estime que trois fonctions de hachage permettent d'avoir une répartition uniforme du stockage des valeurs d'horodatage et le gain en augmentant le nombre de fonctions n'est pas flagrant.

Le filtre de Bloom est utilisé dans un souci d'optimisation du stockage et de rapidité d'exécution. On comprend qu'une telle structure est très intéressante pour mémoriser une grande quantité de noms de ressources de taille variable. Il présente également l'avantage de respecter l'anonymat des utilisateurs à l'origine des requêtes. En effet, le filtre est destiné à mémoriser des valeurs hachées qui ne permettent pas d'obtenir des informations sur les ressources effectivement requises depuis le terminal.

Il est possible qu'un cybercriminel modifie le champ référent de la requête courante en introduisant dans le champ référent une référence à une ressource initiale qui a de fortes chances de figurer dans l'historique des requêtes. Par exemple, le cybercriminel a modifié le champ référent de la requête courante en précisant une ressource populaire, telle que « google.com », « facebook.com » ou « yahoo.com », qui a de fortes probabilités de se trouver dans l'historique des requêtes. Dans ce cas, aucune alerte n'est levée et dans l'exemple ou l'étape E4 de blocage est mise en œuvre, la requête est bloquée. En tout état de cause il y a de fortes chances qu'une prochaine tentative du cybercriminel soit détectée et conduise à une alerte. Il y a cependant également un risque qu'une prochaine requête courante, falsifiée par le cybercriminel comprenne une ressource courante malveillante qui ne soit pas encore enregistrée dans la base des ressources malveillantes, permettant ainsi au cybercriminel de perpétrer son attaque.

Afin de pallier ce cas, dans un autre exemple de réalisation du procédé, chaque requête de ressource qui émane d'un terminal est contextualisée de manière à différencier l'origine de la requête sur le terminal en fonction par exemple de l'application à l'origine de la requête. Ainsi, il est opéré une gestion beaucoup plus fine de l'historique. Dans cet exemple, illustré schématiquement par la figure 3b, en plus de l'adresse IP du terminal, des caractéristiques secondaires propres à chacune des requêtes et qui figurent dans l'entête des requêtes sont prises en compte. Par exemple, les champs suivants peuvent être utilisés en tant que caractéristiques secondaires :
- « User-Agent » : ce champ indique au serveur destinataire de la requête le nom et la version de l'application cliente à l'origine de la requête. Par exemple, l'application cliente peut être un navigateur web ou un outil automatisé ;
- « Accept-Language » : ce champ indique la langue, ou les langues par ordre de préférence, dans laquelle l'utilisateur souhaite recevoir la réponse du serveur suite à une requête. On comprend que cette valeur peut facilement varier selon la nationalité de l'utilisateur du terminal qui émet la requête. Par contre, si un cybercriminel crée un logiciel malveillant adapté pour émettre des requêtes à l'insu de l'utilisateur du terminal, il y a de fortes chances que ce champ soit identique quel que soit le terminal qui exécute le logiciel malveillant. Il y a donc de fortes chances que ce champ varie selon qu'une requête à une ressource émise depuis le terminal soit légitime ou illégitime.

Dans cet exemple de réalisation, il est créé pour chaque terminal une pluralité de contextes propres à l'adresse IP du terminal et à un ou plusieurs champs de la requête pour affiner le filtre. Ainsi, pour un terminal donné, il est créé potentiellement p-filtres pour p valeurs différentes du champ sélectionné. Ce mode de réalisation permet de dissocier clairement les historiques propres à différentes applications qui s'exécutent sur le terminal. Cependant, cela implique nécessairement une charge mémoire plus importante.

Afin de pallier cet inconvénient, dans un autre exemple de réalisation, il est géré un seul historique pour le ou les champs d'entête pris en compte en tant que caractéristiques secondaires. Dans cet exemple, illustré schématiquement au moyen de la figure 3c, il est combiné à une ressource courante légitime destinée à être enregistrée dans l'historique, conformément à l'étape E3 de mise à jour de l'historique, la valeur du champ sélectionné avant de faire appel aux fonctions de hachage pour calculer les positions associées dans le vecteur Tb. Dans cet exemple, un seul historique est géré pour stocker l'ensemble des requêtes en provenance d'un terminal identifié par son adresse IP, tout en distinguant dans le vecteur associé à l'historique les différents champs pris en compte. Dans un exemple de réalisation, le champ sélectionné et la ressource courante légitime sont concaténés avant la mise en œuvre de la sous-étape E31 de conversion. On comprend que pour mettre en œuvre cet exemple de réalisation, l'historique doit être dimensionné en conséquence. En particulier il nécessite plus d'espace mémoire que dans l'exemple de réalisation précédent, dans lequel un historique est associé à chaque champ sélectionné. Cependant, l'historique étant unique, la mémoire à lui allouer peut être réservée de manière statique.

Dans tous les exemples de réalisation décrits précédemment, le dispositif de surveillance 40 est un dispositif distinct du terminal. Ce peut être un équipement de filtrage adapté pour filtrer le trafic d'une pluralité de terminaux d'un réseau local ou d'un réseau d'entreprise. Dans ce cas l'administrateur de sécurité est un administrateur de sécurité du réseau local ou du réseau d'entreprise. L'invention n'est pas limitée à cet exemple de réalisation. Ainsi, dans un autre exemple, le dispositif de surveillance 40 est un module logiciel de surveillance intégré à un logiciel de type anti-virus, installé sur le terminal. Dans ce cas l'administrateur qui est alerté en cas d'infection peut être l'utilisateur du terminal.

Le procédé décrit ici permet de distinguer les accès directs à des ressources malveillantes des accès indirects à ces mêmes ressources. Les accès directs sont associés à des infections du terminal alors que les accès indirects sont associés à des tentatives d'infection du terminal. Ces tentatives d'infection, détectées, voire jugulées, ne donnent pas lieu à des alertes et permettent ainsi de ne lever des alertes que lors de la détection d'une réelle infection du terminal. Ainsi, la fiabilité de la détection d'infection est améliorée.

Un dispositif de surveillance 40, selon un exemple de réalisation va maintenant être décrit en relation avec la figure 3.

Le dispositif de surveillance 40 est agencé pour surveiller un trafic réseau en provenance d'un terminal informatique et à destination d'un réseau, tel que le réseau Internet et pour aider à la détection d'une infection du terminal par un logiciel malveillant. Dans un exemple de réalisation, le dispositif de surveillance 40 est un équipement informatique de filtrage de trafic, positionné dans le réseau, tel qu'une passerelle filtrante. Le dispositif de filtrage 40 comprend un module logiciel agencé pour mettre en œuvre les étapes du procédé d'aide à la détection d'infection d'un terminal par un logiciel malveillant, tel que décrit précédemment.

Le dispositif de surveillance 40 comprend :
- une unité de traitement ou processeur 401, ou "CPU" (de l'anglais "Central Processing Unit"), destinée à charger des instructions en mémoire, à les exécuter, à effectuer des opérations ;
- un ensemble de mémoires, dont une mémoire volatile 402, ou "RAM" (pour "Random Access Memory") utilisée pour exécuter des instructions de code, stocker des variables, etc., et une mémoire de stockage 403 de type « EEPROM » (de l'anglais « Electrically Erasable Programmable Read Only Memory »). En particulier, la mémoire de stockage 403 est agencée pour mémoriser un module logiciel d'aide à la détection d'infection d'un terminal par un logiciel malveillant qui comprend des instructions de code pour mettre en œuvre les étapes du procédé d'aide à la détection d'infection d'un terminal tel que décrit précédemment.;

Le dispositif de surveillance 40 comprend également :
- un module de réception 404, agencé pour recevoir en provenance du terminal et à destination d'un serveur du réseau une requête courante de demande d'accès à une ressource. Le module de réception 404 est agencé pour mettre en œuvre l'étape E0 du procédé d'aide à la détection d'infection d'un terminal tel que décrit précédemment ;
- un module de détection 405, agencé pour détecter que la ressource qui figure dans la requête courante est une ressource malveillante. Le module de détection 405 est ainsi adapté pour vérifier si la ressource requise appartient à une base de données de ressources malveillantes connues du réseau. Le module de détection 405 est agencé pour mettre en œuvre l'étape E1 de test du procédé d'aide à la détection d'infection d'un terminal tel que décrit précédemment ;
- un module de vérification 406, agencé pour vérifier, lorsque la requête courante comprend une référence à une ressource initiale, qu'un accès à la ressource initiale a été demandé depuis le terminal dans au moins une requête antérieure. La ressource initiale ayant par ailleurs été détectée comme légitime, la requête courante est considérée comme une tentative d'infection du terminal. Le module de vérification 406 est agencé pour mettre en œuvre l'étape E7 de test d'appartenance du champ référent à l'historique du procédé d'aide à la détection d'infection tel que décrit précédemment.

Dans un exemple de réalisation, le dispositif de surveillance 40 comprend également un module d'alerte de l'administrateur (non représenté sur la figure 4), destiné à prévenir l'administrateur du réseau de la présence d'une infection. Une alerte à l'attention de l'administrateur peut être envoyée de diverses façons : envoi d'un e-mail, envoi d'un « sms » (de l'anglais « short message service »), notification dans un fichier journalisé, affichage d'une page d'alerte lors de la navigation web ou sur un portail, insertion d'un message d'alerte dans un contenu web visité, etc.

Les modules de réception 404, de détection 405 et de vérification 406 sont de préférence des modules logiciels comprenant des instructions logicielles pour mettre en œuvre les étapes du procédé d'aide à la détection d'infection d'un terminal précédemment décrit.

L'invention concerne donc aussi :
- un programme d'ordinateur comportant des instructions pour la mise en œuvre du procédé d'aide tel que décrit précédemment lorsque ce programme est exécuté par un processeur du dispositif de surveillance 40,
- un support d'enregistrement lisible sur lequel est enregistré le programme d'ordinateur décrit ci-dessus.

Dans l'exemple décrit ici, le dispositif de surveillance 40 est un équipement informatique de type passerelle filtrante positionnée dans le réseau. L'invention n'est pas limitée à ce type d'équipement. Ainsi, dans un autre exemple de réalisation, le dispositif de surveillance 40 est intégré dans un terminal utilisateur qui comprend les modules logiciels agencés pour mettre en œuvre les étapes du procédé d'aide à la détection d'infection du terminal décrit précédemment. Par exemple ces modules sont compris dans un logiciel antivirus ou dans un logiciel anti-malware installé sur le terminal. Dans ce cas, l'administrateur alerté de l'infection du terminal peut être l'utilisateur.

## Revendications

1. Procédé d'aide à la détection d'infection d'un terminal par un logiciel malveillant, comprenant :
- réception (E0) en provenance du terminal d'une requête courante de demande d'accès à une ressource d'un réseau,
- détection (E1) que la ressource requise est malveillante,
- lorsque l'entête de la requête courante comprend également (E5) une référence à une ressource initiale à partir de laquelle la ressource a été obtenue, vérification (E7) qu'un accès à la ressource initiale a été demandé depuis le terminal dans au moins une requête antérieure, ladite ressource initiale ayant été détectée légitime lors du traitement de la requête antérieure, ladite requête courante étant alors considérée comme une tentative d'infection du terminal.

2. Procédé selon la revendication 1, comprenant, lorsque la ressource initiale dont la référence est comprise dans la requête courante n'a pas été demandée par le terminal dans une requête antérieure pendant un intervalle de temps de supervision, un envoi (E8) d'une alerte représentative d'une infection du terminal.

3. Procédé selon l'une des revendications précédentes, comprenant, lorsque la ressource requise est une ressource légitime, un enregistrement (E3) de ladite ressource en association avec une valeur d'horodatage courante, représentative d'une dernière date d'accès à la ressource.

4. Procédé selon la revendication 3, dans lequel la ressource est enregistrée dans un historique de requêtes, l'enregistrement de la ressource comprenant :
- application (E32) d'au moins une fonction de hachage à une valeur binaire courante associée à la ressource,
- détermination (E33) d'au moins une position courante dans un filtre de Bloom à date d'expiration à partir de ladite valeur binaire courante, ledit filtre étant associé au terminal et assimilé à l'historique des requêtes, et
- enregistrement (E34) de la valeur d'horodatage courante à ladite position courante du filtre.

5. Procédé selon la revendication 4, dans lequel une recherche d'une ressource initiale dans le filtre comprend :
- application (E72) de la fonction de hachage à une valeur binaire initiale associée à la ressource initiale,
- détermination (E73) d'au moins une position dans le filtre de Bloom à partir de ladite valeur binaire initiale,
- sélection (E75), parmi la au moins une position, de la position dans le filtre qui comprend la valeur d'horodatage la plus faible,
- lorsque la durée comprise entre la valeur d'horodatage la plus faible et une date courante est inférieure à une durée d'expiration associée au filtre, indication (E76) que la ressource initiale figure dans l'historique.

6. Procédé selon la revendication 4 ou la revendication 5, dans lequel le filtre de Bloom est associé au terminal et à au moins un champ compris dans un entête de la requête courante.

7. Dispositif d'aide à la surveillance d'un trafic réseau, agencé pour aider à la détection d'infection d'un terminal par un logiciel malveillant, ledit dispositif comprenant :
- des moyens de réception (404), agencés pour recevoir en provenance du terminal une requête courante de demande d'accès à une ressource d'un réseau,
- des moyens de détection (405), agencés pour détecter que la ressource requise est malveillante,
- des moyens de vérification (406), agencés pour vérifier, lorsque l'entête de la requête courante comprend également une référence à une ressource initiale à partir de laquelle la ressource a été obtenue, que l'accès à la ressource initiale a été demandé depuis le terminal dans au moins une requête antérieure, ladite ressource initiale ayant été détectée légitime lors du traitement de la requête antérieure, ladite requête courante étant alors considérée comme une tentative d'infection du terminal.

8. Terminal utilisateur comprenant un dispositif d'aide à la surveillance selon la revendication 7.

9. Programme d'ordinateur sur un support de données et chargeable dans la mémoire d'un ordinateur, le programme comprenant des portions de code pour l'exécution des étapes du procédé d'aide à la détection d'infection d'un terminal par un logiciel malveillant selon l'une quelconque des revendications 1 à 6, lorsque le programme est exécuté sur ledit ordinateur.

10. Support de données dans lequel est enregistré le programme selon la revendication 9.

## Patentansprüche

1. Verfahren zur Unterstützung der Erkennung einer Infektion eines Endgeräts durch Schadprogramme, umfassend:
- Empfangen (E0) einer aktuellen Anfrage des Endgeräts für eine Zugangsanforderung zu einer Ressource eines Netzes,
- Erkennen (E1), dass die angefragte Ressource schadbehaftet ist,
- wenn der Kopf der aktuellen Anfrage auch eine Referenz auf eine Erstressource umfasst (E5), auf deren Grundlage die Ressource erhalten wurde, Überprüfen (E7), dass ein Zugang zur Erstressource in mindestens einer vorherigen Anfrage vom Endgerät angefordert wurde, wobei die Erstressource bei der Verarbeitung der vorherigen Anfrage als legitim erkannt wurde, wobei die aktuelle Ressource demnach als Versuch einer Infektion des Endgeräts erkannt wird.

2. Verfahren nach Anspruch 1, umfassend Senden (E8) einer Warnung, die für eine Infektion des Endgeräts repräsentativ ist, wenn die Erstressource, deren Referenz in der aktuellen Anfrage enthalten ist, während eines Überwachungszeitintervalls nicht in einer vorherigen Anfrage vom Endgerät angefordert wurde.

3. Verfahren nach einem der vorhergehenden Ansprüche, umfassend Speichern (E3) der Ressource zusammen mit einem aktuellen Zeitstempelwert, der für das letzte Datum des Zugangs zur Ressource repräsentativ ist, wenn die angefragte Ressource eine legitime Ressource ist.

4. Verfahren nach Anspruch 3, wobei die Ressource in einem Anfragenverlauf gespeichert wird, wobei das Speichern der Ressource umfasst:
- Anwenden (E32) mindestens einer Hash-Funktion auf einen der Ressource zugeordneten aktuellen Binärwert,
- Bestimmen (E33) mindestens einer aktuellen Position in einem Bloom-Filter mit Ablaufdatum auf der Grundlage des aktuellen Binärwerts, wobei das Filter dem Endgerät zugeordnet ist und an den Anfrageverlauf angepasst ist, und
- Speichern (E34) des aktuellen Zeitstempelwerts an der aktuellen Position des Filters.

5. Verfahren nach Anspruch 4, wobei eine Suche nach einer Erstressource im Filter umfasst:
- Anwenden (E72) der Hash-Funktion auf einen der Erstressource zugeordneten Erstbinärwert,
- Bestimmen (E73) mindestens einer Position im Bloom-Filter auf der Grundlage des Erstbinärwerts,
- Auswählen (E75) der Position im Filter, die den niedrigsten Zeitstempelwert umfasst, aus der mindestens einen Position,
- wenn die Dauer zwischen dem niedrigsten Zeitstempelwert und einem aktuellen Datum kleiner ist als eine dem Filter zugeordnete Ablaufdauer, Angeben (E76), dass die Erstressource im Verlauf vorkommt.

6. Verfahren nach Anspruch 4 oder Anspruch 5, wobei das Bloom-Filter dem Endgerät und mindestens einem Feld, das im Kopf der aktuellen Anfrage enthalten ist, zugeordnet ist.

7. Vorrichtung zur Unterstützung der Überwachung eines Netzverkehrs, die dafür eingerichtet ist, die Erkennung einer Infektion eines Endgeräts durch Schadprogramme zu unterstützen, wobei die Vorrichtung umfasst:
- Mittel zum Empfangen (404), die dafür eingerichtet sind, eine aktuelle Anfrage des Endgeräts für eine Zugangsanforderung zu einer Ressource eines Netzes zu empfangen,
- Mittel zum Erkennen (405), die dafür eingerichtet sind, zu erkennen, dass die angefragte Ressource schadbehaftet ist,
- Mittel zum Überprüfen (406), die dafür eingerichtet sind, zu überprüfen, wenn der Kopf der aktuellen Anfrage auch eine Referenz auf eine Erstressource umfasst, auf deren Grundlage die Ressource erhalten wurde, dass der Zugang zur Erstressource in mindestens einer vorherigen Anfrage vom Endgerät angefordert wurde, wobei die Erstressource bei der Verarbeitung der vorherigen Anfrage als legitim erkannt wurde, wobei die aktuelle Ressource demnach als Versuch einer Infektion des Endgeräts erkannt wird.

8. Benutzer-Endgerät, umfassend eine Vorrichtung zur Unterstützung der Überwachung nach Anspruch 7.

9. Computerprogramm auf einem Datenträger und in den Speicher eines Computers ladbar, wobei das Programm Codeteile zur Ausführung der Schritte des Verfahrens zur Unterstützung der Erkennung einer Infektion eines Endgeräts durch Schadprogramme nach einem der Ansprüche 1 bis 6 umfasst, wenn das Programm auf dem Computer ausgeführt wird.

10. Datenträger, auf dem das Programm nach Anspruch 9 gespeichert ist.

## Claims

1. Method for assisting with detection of infection of a terminal by malicious software, comprising:
- receiving (E0) from the terminal a current request requesting access to a resource of a network,
- detecting (E1) that the required resource is malicious,
- when the header of the current request also contains (E5) a reference to an initial resource from which the resource was obtained, verifying (E7) that an access to the initial resource has been requested from the terminal in at least one prior request, said initial resource having been detected to be legitimate during the processing of the prior request, said current request then being considered to be an attempt to infect the terminal.

2. Method according to Claim 1, comprising, when the initial resource the reference of which is contained in the current request was not requested by the terminal in a prior request during a supervision time interval, sending (E8) a warning representative of an infection of the terminal.

3. Method according to one of the preceding claims, comprising, when the required resource is a legitimate resource, storing (E3) said resource in association with a current timestamp value representative of a latest date of access to the resource.

4. Method according to Claim 3, wherein the resource is stored in a history of requests, the storage of the resource comprising:
- applying (E32) at least one hash function to a current binary value associated with the resource,
- determining (E33) at least one current position in a time-out Bloom filter on the basis of said current binary value, said filter being associated with the terminal and equivalent to the history of the requests, and
- storing (E34) the current timestamp value at said current position of the filter.

5. Method according to Claim 4, wherein a search for an initial resource in the filter comprises:
- applying (E72) the hash function to an initial binary value associated with the initial resource,
- determining (E73) at least one position in the Bloom filter on the basis of said initial binary value,
- selecting (E75), from the at least one position, the position in the filter that contains the earliest timestamp value,
- when the duration comprised between the earliest timestamp value and a current date is shorter than an expiration duration associated with the filter, indicating (E76) that the initial resource features in the history.

6. Method according to Claim 4 or Claim 5, wherein the Bloom filter is associated with the terminal and with at least one field contained in a header of the current request.

7. Device for assisting with monitoring network traffic, arranged to assist with detection of infection of a terminal by malicious software, said device comprising:
- receiving means (404), arranged to receive from the terminal a current request requesting access to a resource of a network,
- detecting means (405), arranged to detect that the required resource is malicious,
- verifying means (406), arranged to verify, when the header of the current request also contains a reference to an initial resource from which the resource was obtained, that the access to the initial resource has been requested from the terminal in at least one prior request, said initial resource having been detected to be legitimate during the processing of the prior request, said current request then being considered to be an attempt to infect the terminal.

8. User terminal comprising a device for assisting with monitoring according to Claim 7.

9. Computer program on a data medium and loadable into the memory of a computer, the program comprising segments of code for executing the steps of the method for assisting with detection of infection of a terminal by malicious software according to any one of Claims 1 to 6, when the program is executed on said computer.

10. Data medium on which the program according to Claim 9 is stored.
